Europäisches Patentamt

European Patent Office

Office européen des brevets

(11) Numéro de publication : **0 342 127 B1**

(12) **FASCICULE DE BREVET EUROPEEN**

(45) Date de publication du fascicule du brevet :
02.11.94 Bulletin 94/44

(51) Int. Cl.$^5$ : **G01N 21/89**

(21) Numéro de dépôt : 89401326.7

(22) Date de dépôt : 12.05.89

(54) **Procédé pour la determination de la qualité optique du verre plat ou de produits en verre plat.**

(30) Priorité : 13.05.88 DE 3816392

(43) Date de publication de la demande :
15.11.89 Bulletin 89/46

(45) Mention de la délivrance du brevet :
02.11.94 Bulletin 94/44

(84) Etats contractants désignés :
BE DE ES FR GB IT LU

(56) Documents cités :
DE-B- 2 318 532
FR-A- 2 344 830
US-A- 4 005 281
US-A- 4 054 377
US-A- 4 647 197
US-A- 4 724 481
VERRES ET REFRACTAIRES, vol. 26, no. 1, janvier-février 1972, pages 3-11; S. HATIE-GANU : "Mesure de la qualité des verres plats au moyen d'un appareil industriel : le profilos-cope"
H. HEBSEN-MARWEDEL et al.: "Glastechnische Fabrikationsfehler", édition 3, section 3.1 : "Verfahren zur Erfassung von Formfehlern", 1980, pages 76-89, Springer-Verlag, Berlin, DE

(73) Titulaire : SAINT-GOBAIN VITRAGE INTERNATIONAL
18, avenue d'Alsace
F-92400 Courbevoie (FR)
(84) BE ES FR GB IT LU
Titulaire : VEGLA Vereinigte Glaswerke GmbH
Viktoriaallee 3-5
D-52066 Aachen (DE)
(84) DE

(72) Inventeur : Bongardt, Wolfgang
Herstalerstrasse 9
D-5100 Aachen (DE)
Inventeur : Göwert, Helmut
Diepenlinchenerstrasse 40
D-5190 Stolberg (DE)
Inventeur : Winkeler, Hans-Josef
Simpelvelderstrasse no 62
D-5100 Aachen (DE)
Inventeur : Schneiders, Josef
Joaswerk no 32
D-5190 Stolberg (DE)

(74) Mandataire : Menes, Catherine et al
SAINT-GOBAIN RECHERCHE 39, Quai Lucien Lefranc
F-93300 Aubervilliers (FR)

EP 0 342 127 B1

## Description

L'invention concerne un procédé pour la détermination de la qualité optique de verre ou produits en verre plat, en particulier en verre float, suivant lequel on éclaire la feuille de verre sous un angle d'incidence oblique pour former sur un écran de projection, une image de la feuille de verre éclairée qui, suivant les régions en forme de bande qui s'étendent dans une direction de la feuille de verre et ont le caractère de lentilles cylindriques convexes ou concaves, consiste en bandes claires et sombres qui leur sont conjuguées.

Le verre plat et en particulier le verre plat fabriqué par le procédé dit "float", présente régulièrement sur une face ou les deux, des inégalités de surface en forme d'ondulations longitudinales induites par le procédé de fabrication, notamment due à la traction de la nappe de verre. Ces inégalités de surface caractéristiques du verre flotté sont appelées "distorsions de float". Ces inégalités de surface sont tellement faibles qu'elles ne peuvent être détectées par des procédés de mesure mécaniques. Pour la détermination de la qualité optique du verre flotté, on applique par conséquent exclusivement des procédés de contrôle optique.

Il est ainsi connu d'évaluer la qualité de surface des feuilles de verre par ombroscopie. La feuille de verre est traversée par la lumière et l'image qui se forme sur un écran de projection est évaluée visuellement. Les inégalités sur les faces de la feuille de verre agissent en l'occurrence comme lentilles convergentes ou divergentes et donnent sur l'écran un motif de bandes claires et sombres. Une évaluation quantitative de l'image d'ombres ainsi formée n'est pas possible a l'aide des procédés connus.

Le procédé de contrôle de la qualité optique du verre flotté décrit dans le document DE-AS-23 18 532 est aussi du type ombroscopie. On observe l'image qui se forme par réflexion sur l'une des faces de la nappe de verre pour détecter séparément les inégalités de surface sur les deux faces d'une nappe de verre flotté. Pour obtenir qu'une fraction plus importante de la lumière soit réfléchie par la surface d'entrée, on utilise de la lumière polarisée linéairement parallèlement à la surface du verre qui est projetée sur la feuille de verre sous des angles compris entre 57 et 85°. Il est certes fait allusion aussi à la possibilité d'une analyse quantitative de l'image au moyen de rangées de convertisseurs photoélectriques du type photorésistances, phototransistors ou analogues, mais en fait ce procédé ne permet pas de mesures absolues de l'ampleur des défauts optiques de la nappe de verre.

On connaît par ailleurs des procédés pour l'inspection automatique des produits de verre utilisant un calculateur numérique, suivant lesquels un motif étalon consistant en traits ou en points est enregistré à travers l'objet examiné au moyen d'une caméra vidéo et les distorsions apparaissant dans le motif étalon suite à des défauts dans l'objet examiné sont évaluées par traitement numérique des signaux vidéo (DE-A-32 37 511, US-A-4 647 197). Cependant ces procédés ne permettent pas d'effectuer des mesures absolues de la grandeur des défauts dioptriques dans les feuilles de verre.

Pour certains cas d'application de feuilles de verre, il est nécessaire ou souhaitable de pouvoir mesurer et indiquer la qualité optique des feuilles de verre en valeurs absolues de la réfringence des défauts dioptriques. Les normes en vigueur en République Fédérale Allemande imposent par exemple, des variations de la réfringence des pare-brise n'excédant pas $^+$ 0,06 de dioptrie. Les procédés connus permettant d'exécuter une telle mesure quantitative des défauts dioptriques sont onéreux et ne se prêtent pas à une application dans l'industrie.

L'invention a pour but un procédé pour la détermination de la qualité optique du verre plat, en particulier du verre flotté, qui permette de déterminer en valeur absolue la réfringence des zones longitudinales du vitrage présentant des défauts optiques et de corréler les valeurs mesurées de la réfringence avec les zones correspondantes de la feuille de verre. Le procédé doit pouvoir être appliqué directement sur une ligne de fabrication pour une vérification éventuelle en marche continue de la production totale de verre plat d'une ligne de verre flotté.

Conformément à l'invention, ce résultat est obtenu par une ombroscopie caractérisée par les particularités suivantes:

- l'image est enregistrée au moyen d'une caméra vidéo dans un champ de mesure étroit qui s'étend perpendiculairement aux bandes claires et sombres,
- à chaque point de l'image est attribué un signal numérique correspondant à sa densité lumineuse, cette numérisation s'effectuant directement dans la caméra vidéo ou dans un étage de numérisation monté en aval,
- on détermine la différence entre le signal numérique attribué et celui correspondant au profil de densité lumineuse d'une feuille de verre plane parallèle exempte de défauts (profil de densité lumineuse de base),
- on calcule le quotient entre les valeurs de différence et les profils de densité lumineuse de base correspondants, et
- les valeurs absolues de la réfringence ou des valeurs qui y sont proportionnelles sont calculées en mul-

2

tipliant ces quotients par un facteur de correction et sont enfin évaluées numériquement et/ou graphiquement.

L'invention procure un procédé au moyen duquel une détermination quantitative de la réfringence dans le verre flotté peut être effectuée d'une manière simple sans installations optiques onéreuses. Les installations nécessaires au voisinage de la feuille de verre à examiner comprennent uniquement le dispositif d'éclairage, un écran de projection et une ou plusieurs caméras vidéo et il est possible d'agencer sans difficulté ces installations directement au niveau d'une ligne de production pour du verre float. Du fait que l'évaluation d'une image vidéo par le système de traitement d'images peut se faire en un temps très bref, il est par exemple possible de procéder tous les 5 cm à l'examen d'une nappe de verre float qui se déplace à une vitesse de 30 m par minute et de déterminer l'ampleur des défauts dioptriques chaque fois le long d'une ligne s'étendant transversalement sur toute la largeur de la nappe de verre. Même dans le cas d'exigences élevées sur la précision des valeurs de mesure, la mesure à des distances de 50 cm est possible avec la même vitesse de la feuille de verre flotté, moyennant une évaluation convenablement affinée des signaux de mesure. Cela signifie qu'une surveillance plus ou moins ininterrompue de la qualité optique d'une nappe de verre float est de cette façon possible directement sur la ligne de production.

A l'aide du procédé d'évaluation conforme à l'invention, il est en principe possible d'évaluer tant les images produites après que la feuille de verre ait été traversée par le rayonnement et dans lesquelles les défauts dioptriques apparaissent par coopération de la déformation des deux faces de la feuille de verre, que les images produites essentiellement par la réflexion de la lumière à une des faces ou aux deux faces.

Conformément à une forme d'exécution préférée de l'invention, le profil de densité lumineuse de base est déterminé directement à partir des signaux numérisés correspondant au profil mesuré de densité lumineuse de l'image dans le champ de mesure, par un filtrage passe-bas. En l'occurrence, les signaux numérisés peuvent être aussi bien les signaux mesurés non traités que les signaux mesurés et ensuite préfiltrés. Le filtrage passe-bas fait ressortir les modifications de la densité lumineuse induites par les défauts dioptriques de la feuille de verre.

Une autre possibilité de détermination directe du signal de différence consiste à exécuter un filtrage passe-haut des signaux correspondant au profil de densité lumineuse mesuré ou des signaux préfiltrés. Lors de ce filtrage passe-haut, la fréquence de coupure inférieure du filtre passe-haut correspond à la fréquence de coupure supérieure du filtre passe-bas qui est utilisé dans le cas décrit précédemment pour la détermination de la densité lumineuse de base.

Conformément à l'invention, on détermine le quotient entre les signaux de différence et les signaux correspondants à la densité lumineuse de base. Les signaux de base peuvent pour leur part être déterminés de diverses façons. Par exemple, il est possible de les déterminer en mesurant, dans les mêmes conditions d'éclairage et sans lumière parasite, le profil de densité lumineuse d'une feuille de verre plane de même épaisseur de référence, exempte de défauts optiques, et en stockant les signaux mesurés. La feuille de verre de référence doit présenter des faces rigoureusement planes et parallèles, ce qui peut être obtenu par polissage. La feuille de verre peut en variante être une feuille de verre normale, c'est-à-dire porteuse de défauts, les variations de densité lumineuse attribuables aux défauts optiques étant éliminées par un filtrage passe-bas et le profil de densité lumineuse de base ainsi déterminé étant stocké pour servir aux mesures. Dans ce cas également, il faut veiller à ce que les conditions d'éclairage soient les mêmes que lors de la mesure ultérieure du profil de densité lumineuse réel et assurér une protection à l'égard de toute lumière étrangère parasite.

Dans une forme de réalisation du procédé de l'invention, particulièrement efficace, la détermination des signaux pour la densité lumineuse de base se fait à partir du profil de densité lumineuse mesuré, en l'occurrence par un filtrage passe-bas symétrique des signaux correspondant au profil réel immédiatement mesuré ou préfiltré. Dans ce cas, le calcul du quotient est basé à chaque fois sur le profil de base déterminé à partir du profil réel mesuré.

Lors du traitement des signaux numérisés, le bruit fond de est éliminé par filtrage, et ce avantageusement dans un filtre matriciel local symétrique ayant une limite supérieure de la fréquence locale d'au moins 1/(13 mm).

Il est également avantageux de déterminer le profil de densité lumineuse non suivant une ligne unique de l'image vidéo, mais suivant une bande qui comprend une série de lignes de l'image vidéo. Par un filtrage passe-bas approprié, on constitue ainsi des valeurs moyennes représentatives à partir des signaux qui sont chaque fois voisins perpendiculairement à la direction des lignes de l'image. De la sorte, le bruit de fond est davantage atténué.

Lors de la détermination de la densité lumineuse de base, le filtrage passe-bas des signaux correspondant au profil de densité lumineuse mesuré se fait dans un filtre passe-bas symétrique dont la limite supérieure de la fréquence locale est ajustée à une valeur appropriée entre 1/(80 mm) et 1/(12 mm).

Les opérations de filtrage décrites ci-dessus peuvent être exécutées isolément ou bien collectivement soit dans un filtre matriciel résultant dans le domaine local, soit dans un filtre résultant dans le domaine d'image d'une transformation linéaire bidimensionnelle, comme la transformation de Fourier 2D ou la transformation de Walsh 2D, soit par intercalation de transformations linéaires unidimensionnelles, comme la transformation de Fourier ou la transformation de Walsh.

Il n'est pas nécessaire que la densité lumineuse de base soit constante sur toute la largeur de la feuille de verre, c'est-à-dire dans le sens longitudinal du champ de mesure. Elle peut varier de manière quelconque, à la condition que ces variations ne soient pas brutales.

Lorsqu'on veille à ce que tant la densité lumineuse de base que l'angle d'incidence de la lumière restent constants sur la largeur de la feuille de verre, le procédé conforme à l'invention peut être simplifié par l'exécution en un seul stade opératoire de la formation du signal de différence et de la formation du quotient.

Du fait que la densité lumineuse de base est constante et connue, la réfringence s'obtient dans ce cas particulier en soustrayant le signal de densité lumineuse réel de la densité lumineuse de base constante, tandis que la formation du quotient se fait aussi au moyen du facteur de correction. Il va de soi qu'il est nécessaire dans ce procédé simplifié de protéger l'ensemble du dispositif de mesure contre la lumière extérieure parasite. D'autre part, ce procédé simplifié nécessite une densité lumineuse de base qui reste localement constante pour un angle d'incidence constant. Toutefois, du fait que ces conditions ne sont pas faciles à réaliser en pratique, on applique de préférence les procédés décrits précédemment, suivant lesquels la densité lumineuse de base et l'angle d'incidence peuvent varier.

Il va de soi que le procédé conforme à l'invention est applicable non seulement à une ligne de verre float elle-même, mais peut de façon analogue être appliqué à la détermination de la qualité optique de feuilles de verre distinctes ou de produits finis constitués par du verre flotté, par exemple des vitrages automobiles achevés. Pour la détermination de la qualité optique de pare-brise, il peut être avantageux de les examiner suivant deux directions perpendiculaires et de répartir les champs de mesure suivant une grille maillée. En l'occurrence, la grille maillée doit être disposée de façon que la grande dimension des champs de mesure se trouve toujours en substance dans la direction perpendiculaire aux bandes sombres et claires. Eventuellement, la direction principale des défauts optiques peut être déterminée d'abord par un agencement préalable des champs de mesure en éventail pour orienter la position angulaire de la grille de mesure maillée en conséquence.

D'autres avantages et d'autres formes de réalisation avantageuses de l'invention ressortent des sous-revendications et de la description donnée ci-après d'une forme d'exécution en référence aux dessins annexés qui représentent :

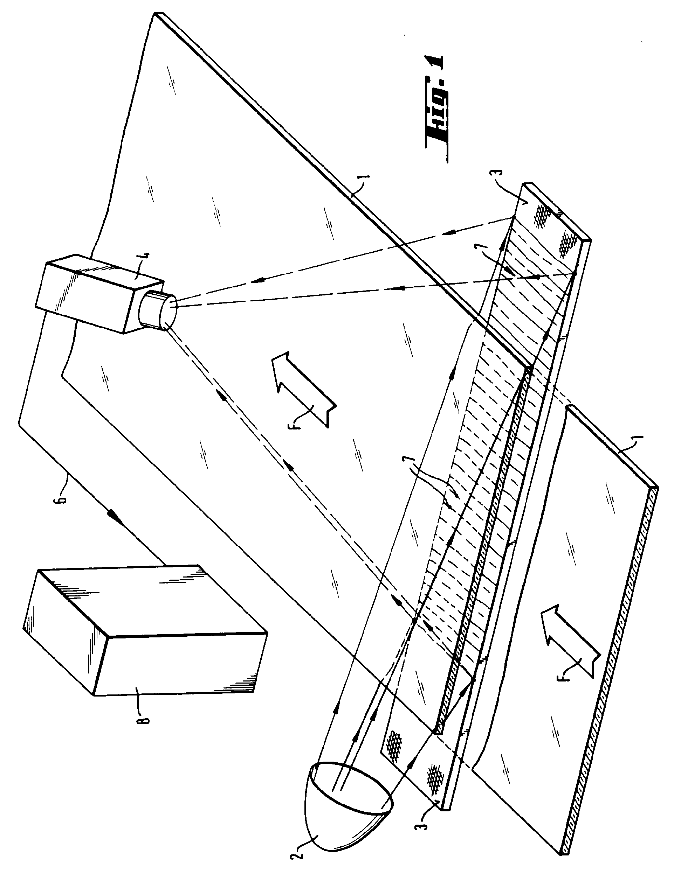

. **figure 1** : un schéma synoptique de l'appareil nécessaire pour l'exécution du procédé,

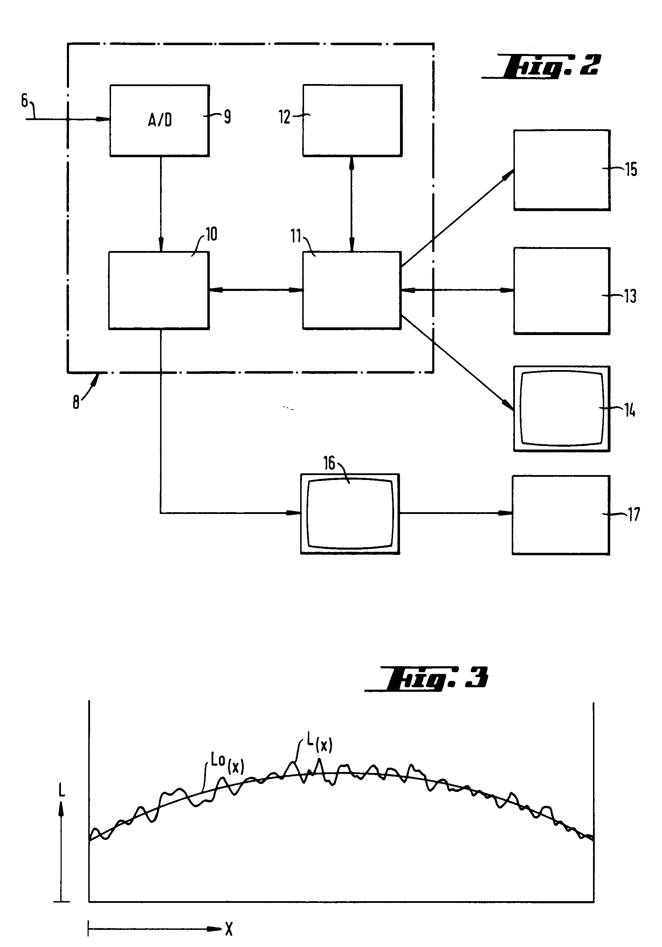

. **figure 2** : un tableau synoptique des composants essentiels nécessaires pour un traitement numérique de l'image,

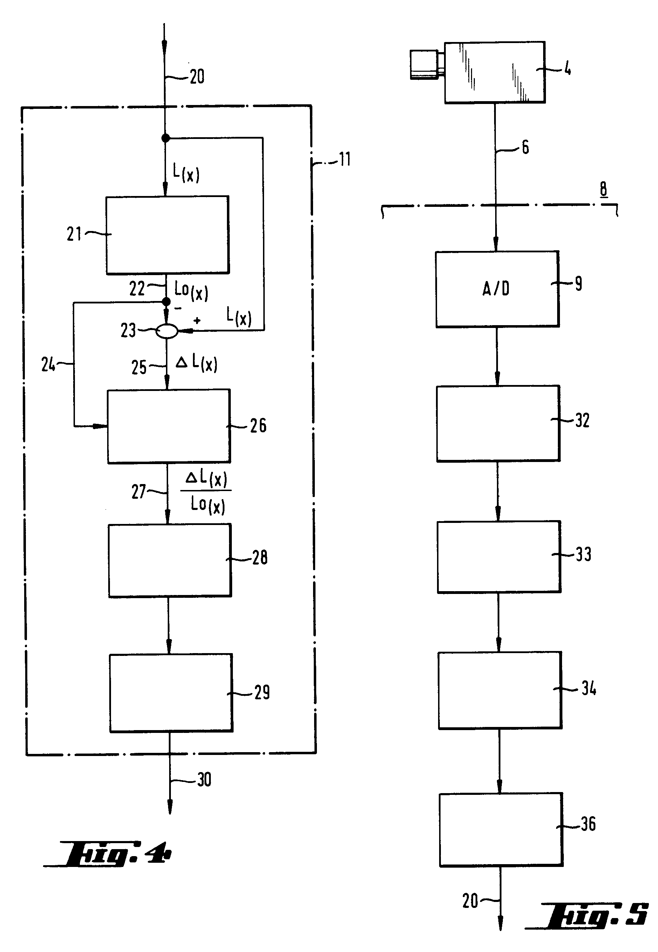

. **figure 3** : un diagramme représentant le profil de densité lumineuse de base et le profil de densité lumineuse mesuré de l'image ombroscopique,

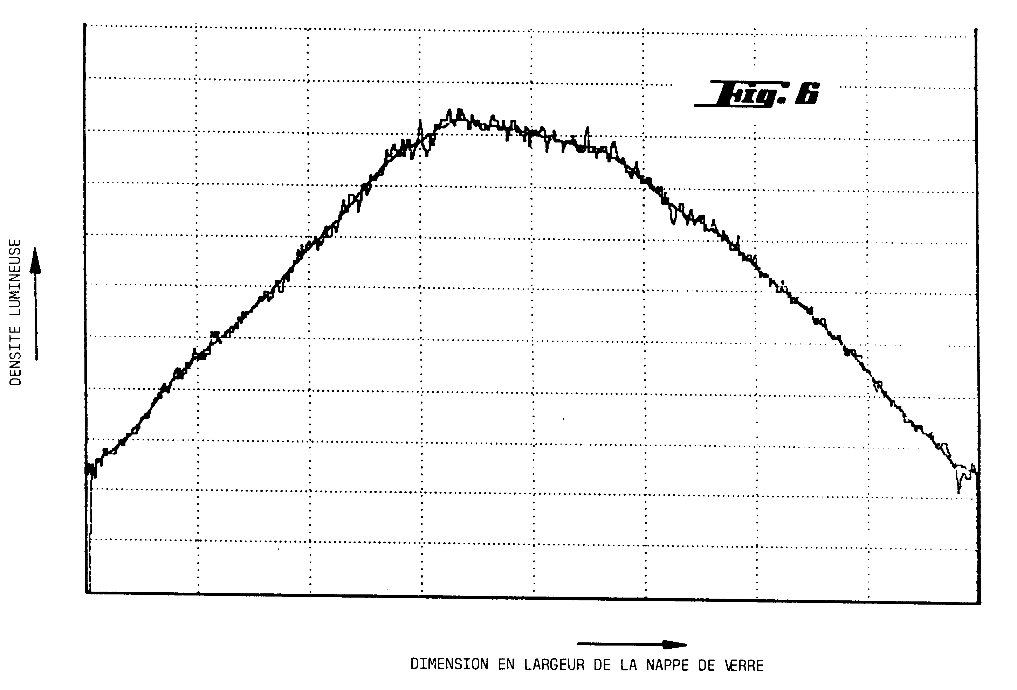

. **figure 4** : un tableau synoptique du circuit de calcul de la réfringence à partir des signaux numérisés,

. **figure 5** : un tableau synoptique du circuit de préparation des signaux fournis par la caméra vidéo précèdant le circuit de calcul proprement dit,

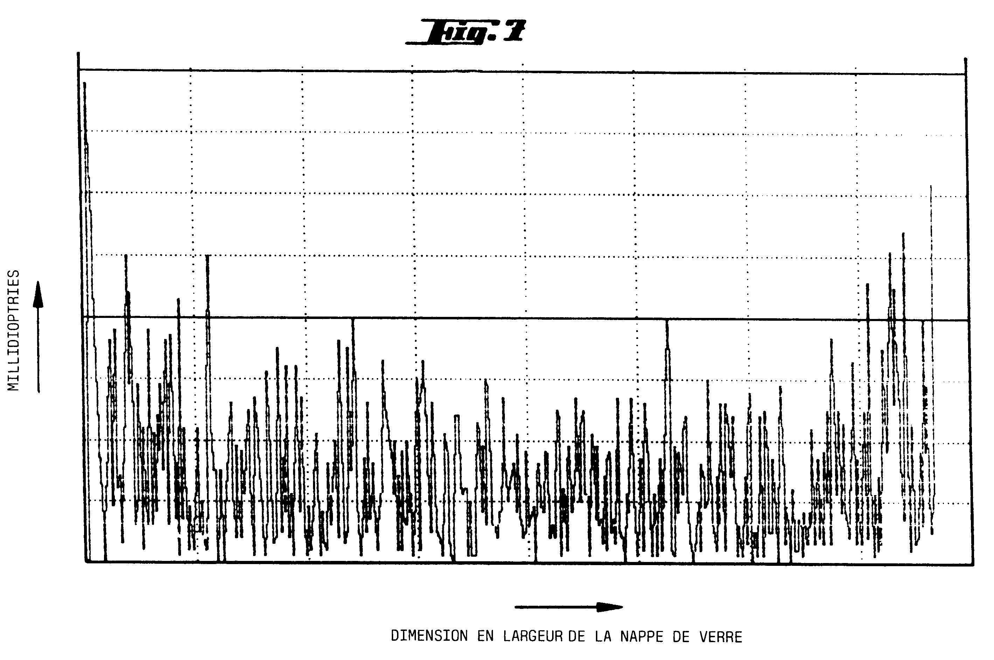

. **figure 6** : la représentation imprimée d'un profil de densité lumineuse mesuré et du profil de densité lumineuse de base qui en est déduit,

. **figure 7** : est la représentation imprimée de l'allure de la réfringence exprimée en millidioptries, calculée à partir des valeurs indiquées à la figure 6.

Comme il ressort de la figure 1, une nappe de verre float 1 fabriquée en marche continue, représentée ici sous la forme d'un segment de nappe de verre, se déplace à une vitesse d'environ 10 à 30 m par minute suivant l'épaisseur du verre, dans le sens de la flèche F et vers un poste de découpe non représenté.

Dans le poste de découpe, des plaques de verre d'une longueur d'environ 6 m sont coupées de la nappe de verre et empilées. La largeur de la nappe de verre 1 est de plus de 3 m.

A un endroit approprié dans la ligne de fabrication, un domaine suffisamment étendu est protégé de la lumière du jour parasite en excès ou de toute autre lumière étrangère parasite par le montage d'une cabine dont les parois sont étanches à la lumière et qui n'est pas représentée ici pour une question de clarté de la figure. A l'intérieur de cette cabine on place une source lumineuse 2 à côté de la nappe de verre 1.

La lumière émise par la source lumineuse 2 atteint la nappe de verre sous un angle d'incidence compris entre 70 et 80°.

L'éclairage oblique sous un angle d'incidence aussi grand que possible est avantageux pour obtenir une image très contrastée. D'autre part, l'angle d'incidence ne peut être trop grand parce qu'une fraction croissante de la lumière est alors réfléchie par la surface du verre de sorte que la quantité de lumière traversant le verre et nécessaire pour la mesure devient alors trop petite.

Un écran de projection 3 dont la surface est blanche est disposé sous la feuille de verre 1 dans le domaine éclairé par la source lumineuse 2.

L'image 7 qui est provoquée par les inégalités de surface en forme de bande de la feuille de verre, encore appelées "distorsions de float", apparaît sur l'écran de projection 3 sous la forme de bandes claires et sombres qui s'étendent dans le sens longitudinal de la feuille de verre. Les ondulations de surface peuvent être considérées comme étant des lentilles cylindriques convexes et concaves. Les domaines concaves, qui agissent comme lentilles divergentes, apparaissent sur l'écran de projection 3 sous la forme de bandes sombres, et les domaines convexes, qui ont l'effet de lentilles convergentes, apparaissent sous la forme de bandes claires. La distance entre l'écran de projection 3 et la nappe de verre n'est pas critique, mais doit être choisie de façon que le plan de l'image se trouve nettement en avant du foyer des lentilles.

Une caméra vidéo 4 est disposée au-dessus de la nappe de verre 1 avant ou après l'écran de projection 3 observé dans le sens du mouvement de la nappe de verre. Les images enregistrées par la caméra vidéo 4 sont transmises par la ligne 6 à un système de traitement d'images 8 dans lequel se fait le traitement numérique de l'image vidéo.

Le système de traitement d'images 8 comprend, comme il ressort de la représentation schématique de la figure 2, un convertisseur analogique/numérique 9, qui peut le cas échéant être déjà contenu dans la caméra vidéo, un processeur 10, un calculateur 11 et une mémoire de masse 12. Un clavier de commande 13, de même qu'un dispositif de visualisation des données 14 et une imprimante 15 sont connectés au calculateur 11. En outre, le dispositif pour le traitement numérique de l'image comprend un affichage vidéo 16 connecté au processeur 10 et un traceur vidéo 17.

Dans le convertisseur analogique/numérique 9, les signaux pour chaque point de l'image, qui définissent sa position et sa luminosité ou valeur de gris, c'est-à-dire sa densité lumineuse, sont convertis en signaux numériques correspondants. Pour pouvoir décrire la densité lumineuse avec une précision suffisante à l'aide de signaux numériques, le domaine de luminosité à couvrir au total doit être subdivisé en un nombre suffisamment grand de niveaux de gris. Le nombre des niveaux de gris doit être d'au moins 64 et de bons résultats sont obtenus lorsqu'on dispose, par exemple de 128 niveaux de gris.

Le processeur 10 a entre autres pour fonction de convertir, suivant des procédés de traitement d'images connus, l'image vidéo d'origine en une image vidéo transformée ayant un contraste meilleur que celui de l'image originale. Des cartes de traitements d'images disponibles sur le marche peuvent être utilisées pour ce processeur dit d'images. Le processeur 10 comprend une mémoire d'images dans laquelle est stockée l'image vidéo dont le contraste a été amélioré.

L'image vidéo transformée à l'aide du processeur 10 et ayant un contraste d'image amélioré constitue à présent la base du traitement d'images ultérieur effectué par le calculateur 11. Le calculateur 11 calcule, à l'aide d'un algorithme développé à cet effet, à partir des informations de densité lumineuse stockées dans la mémoire d'images du processeur 10, le profil de réfringence de la nappe de verre. Au calculateur 11 est connectée une mémoire de masse 12 qui sert à stocker les programmes et à archiver les images vidéo originales ou à contraste amélioré et/ou les images calculées à partir de celles-ci, ainsi que les valeurs de réfringence associées.

Le développement de l'algorithme, suivant lequel le calcul du profil de la réfringence est exécuté dans le calculateur 11 à partir des informations d'images présentes dans la mémoire d'images du processeur 10, se fait par déduction mathématique pour le cas où la lumière traverse la nappe de verre et où l'écran portant l'image d'ombres est disposé à l'écart de la nappe de verre du côté de sortie de la lumière. Il apparaît alors que la distance entre l'écran et la nappe de verre intervient comme facteur constant dans le calcul et que la réfringence $D$ de la feuille de verre en un point $x$ peut être calculée au moyen de la formule :

$$D(x) = K \, \delta L(x) / Lo(x)$$

Dans cette formule :

$D$ = réfringence en dioptries,
$K$ = constante,
$L$ = différence entre la densité lumineuse effective mesurée et la luminosité de base,
$Lo$ = luminosité de base qui est mesurée sur l'écran pour une nappe de verre plane parallèle idéale.

Il est donc suffisant pour le calcul de la réfringence de connaître d'une part l'allure de la luminosité de base sur la largeur de la nappe de verre, et d'autre part l'allure de la luminosité ou densité de lumière effective sur la largeur de la nappe de verre, sous la forme de grandeurs numériques pour les divers points de l'image pour pouvoir en déduire immédiatement l'allure de la réfringence, c'est-à-dire le profil de la réfringence.

La figure 3 est un diagramme représentant pour le mode d'éclairage illustré à la figure 1, l'allure de la luminosité de base $Lo_{(x)}$ sur la largeur de la nappe de verre, de même que l'allure de la luminosité ou densité lumineuse $L_{(x)}$ effective. La luminosité de base $Lo_{(x)}$ augmente de façon continue jusqu'au milieu de la nappe de verre. La densité lumineuse mesurée $L_{(x)}$ constitue une courbe qui serpente autour de la courbe de luminosité de base.

La courbe de la luminosité de base est déterminée par extraction par filtrage à l'aide d'un filtre symétrique ayant un comportement passe-bas des valeurs effectives mesurées du profil de densité lumineuse. La fréquence de coupure supérieure de ce filtre passe-bas est réglable. On obtient de bons résultats lorsque la fréquence de coupure supérieure fq est réglée sur une valeur comprise entre $1/(80\ mm)$ et $1/(12\ mm)$. Il s'est révélé qu'un tel calcul de la luminosité de base à partir des allures de densité lumineuse mesurées est possible avec une haute reproductibilité, à condition d'éliminer toute lumière parasite. Les courbes de luminosité de base calculées de la sorte sont superposables pour une épaisseur constante du verre même lorsque le calcul est effectué à de plus grands intervalles de temps.

La figure 4 illustre sous la forme d'un tableau schématique comment le calculateur effectue le traitement des divers points de l'image, par exemple lors de l'évaluation d'une seule ligne de l'image vidéo. La valeur de mesure numérisée de la densité lumineuse réelle $L_{(x)}$ de chaque point de l'image est transmise par la ligne 20 à un filtre symétrique 21 à comportement passe-bas dans le sens transversal de la nappe de verre. A la sortie 22 de ce filtre passe-bas 21 apparaît un signal qui correspond à la luminosité de base $Lo_{(x)}$ du point d'image en question. Le signal $Lo_{(x)}$ et le signal $L_{(x)}$ sont transmis à un étage de soustraction 23 dans lequel est formée la différence $\delta L_{(x)}$ entre ces deux signaux. Le signal $Lo_{(x)}$ apparaissant à la sortie 22 est transmis par la ligne 24 et le signal de différence $\delta L_{(x)}$ est transmis par la ligne 25 à un étage de division 26 dans lequel est formé le quotient $\delta L_{(x)}/Lo_{(x)}$.

Le quotient $\delta L_{(x)}/Lo_{(x)}$ est transmis par la ligne 27 à un étage de correction 28. L'étage 28 a pour fonction d'apporter a la réfringence calculée une correction qui tenant compte de l'angle d'incidence du point correspondant a l'image. Une conversion de la réfringence pour le cas d'une lumière incidente verticale est donc ainsi opérée. A l'étage de correction 28 succède un étage de conversion 29, dans lequel a lieu la multiplication du signal d'entrée par une constante d'étalonnage. La constante d'étalonnage est déterminée empiriquement par comparaison avec des feuilles de verre dont la réfringence est connue. La ligne 30 à la sortie de l'étage de conversion 29 porte à présent un signal qui correspond directement à la réfringence du verre à l'endroit afférent au point d'image mesuré. Ce signal peut à présent être transmis aux diverses unités représentées à la figure 2 en vue d'une nouvelle évaluation et/ou du stockage.

L'évaluation d'une image vidéo le long d'une seule ligne d'image conduit à des valeurs de mesure qui, en raison de la fraction de bruit dans le signal vidéo, n'ont inéluctablement pas une très grande précision. Pour augmenter la précision de mesure, il convient d'évaluer une bande étroite de quelques lignes d'images contiguës en formant chaque fois la valeur moyenne à partir des densités lumineuses des points qui se suivent dans les lignes à évaluer - dans le sens longitudinal de la nappe de verre. On obtient des résultats satisfaisants en évaluant par exemple 4 à 8 lignes successives. La formation de la valeur moyenne s'opère par connexion en amont d'un filtre passe-bas dont la fréquence de coupure supérieure est réglable. Ce mode d'évaluation de l'image le long d'une bande étroite ne comprenant que quelques lignes offre l'avantage d'un temps de calcul très bref, de sorte qu'un contrôle plus ou moins continu de la nappe de verre flotté est possible.

Pour une encore plus grande précision de mesure, le calcul doit être fondé sur des valeurs moyennes s'étendant sur une bande d'une largeur de plusieurs centimètres. Par exemple, on atteint une très haute précision lorsqu'on évalue une bande large de quelques centimètres. Dans ce cas, le calcul du profil de la réfringence par le calculateur prend bien entendu un temps sensiblement plus long. Pour former la moyenne des densités lumineuses des points d'une rangée suivant le sens longitudinal de la nappe de verre, c'est-à-dire transversalement aux bandes à évaluer, les signaux numérisés correspondant à ces points sont déparasités au moyen d'un filtre local passe-bas bidimensionnel et à nouveau filtrés dans un filtre longitudinal approprié, grâce à quoi des valeurs représentatives sont chaque fois obtenues.

La figure 5 illustre le procédé de préparation des signaux fournis par la caméra vidéo 4 avant le processus de calcul proprement dit qui se fait conformément au procédé illustré à la figure 4. Le signal provenant de la caméra vidéo 4 est converti en une image vidéo numérique dans le convertisseur analogique/numérique 9 dans lequel la valeur de tension analogique correspondant à la densité lumineuse réelle d'un point d'image particulier est convertie en une valeur numérique. Pour améliorer le contraste de l'image, la valeur de gris d'origine est immédiatement convertie dans un étage de transformation 32 en une valeur de gris transformée. Afin de ne pas falsifier le profil de densité lumineuse dans l'étage de transformation, on choisit à cet effet une transformation linéaire qui représente le domaine de gris du signal vidéo dans le domaine de gris maximal de la mémoire d'image.

L'image transformée ainsi déterminée, qui peut apparaître au lieu de l'image originale sur l'affichage vidéo 16 (figure 2), est introduite dans la mémoire d'image 33. L'image de densité lumineuse est ensuite déparasitée dans un étage de déparasitage 34. L'étage de déparasitage 34 consiste essentiellement en un filtre passe-bas symétrique bidimensionnel dont la fréquence de coupure est réglable. A l'étage de déparasitage 34 succède un étage de filtrage 36 dans lequel, à l'aide d'un filtre passe-bas, est formée la valeur moyenne représentative pour les valeurs de densité lumineuse situées dans une rangée dans le sens longitudinal de la nappe de verre. Le filtre passe-bas de l'étage de filtrage 36 est symétrique. Sa fréquence de coupure supérieure est réglable et s'élève par exemple à 1/(80 mm). Le filtrage dans l'étage de déparasitage 34 et dans le filtre longitudinal 36 réduit la fraction de bruit statistique de l'image suffisamment pour qu'elle ne gène plus lors du calcul ultérieur. A la sortie de l'étage de filtrage 36 apparaît à présent sur la ligne 20 le signal qui est transformé en les valeurs de réfringence au moyen du circuit de calcul décrit à la figure 4.

Le résultat du traitement de signal exécuté de la façon décrite peut être représenté et archivé de manière quelconque. Un mode de représentation qui peut tout aussi bien être restitué sur l'affichage vidéo qu'imprimé est représenté sous la forme de représentations imprimées aux figures 6 et 7.

La figure 6 représente le profil de densité lumineuse effectif et le profil de densité lumineuse de base qui en est déduit sur la dimension transversale de la nappe de verre, en l'occurrence sur la base des valeurs qui s'obtiennent après le déparasitage par filtrage et le calcul de la moyenne longitudinale des signaux mesurés (préfiltrage). La distance verticale entre deux lignes horizontales de division correspond dans ce cas à dix unités de valeur de gris.

La figure 7 est le diagramme de la réfringence calculé sur la base des valeurs indiquées à la figure 6, les valeurs absolues calculées de la réfringence étant à nouveau reportées à la même échelle sur la largeur de la nappe de verre. La distance verticale entre les lignes horizontales de division correspond chaque fois à une réfringence de 2,5 millidioptries. La position et l'intensité des défauts dioptriques au-dessus d'une valeur limite d'alerte réglable peuvent ainsi être détectées et archivées automatiquement. Les données peuvent éventuellement être transmises, par une interface de couplage, à un système d'automatisation dans lequel la découpe de la nappe de verre et le triage des plaques de verre peuvent se faire sur la base de ces données suivant les différentes exigences de qualité.

## Revendications

1. Procédé pour la détermination de la qualité optique du verre plat, en particulier du verre float, ou de produits en verre plat, suivant lequel on éclaire la feuille de verre (1) sous un angle d'incidence oblique et on forme sur un écran de projection, une image ombroscopique de la feuille de verre (1) éclairée, qui, suivant les régions en forme de bande qui s'étendent dans une direction de la feuille de verre et ont le caractère de lentilles cylindriques convexes ou concaves, consiste en bandes claires et sombres qui leur sont conjuguées, **caractérisé par** les particularités suivantes :
   - l'image est enregistrée au moyen d'une caméra vidéo (4) dans un champ de mesure étroit qui s'étend perpendiculairement aux bandes claires et sombres,
   - à chaque point de l'image est attribué un signal numérique correspondant à sa densité lumineuse, cette numérisation s'effectuant directement dans la caméra vidéo (4) ou dans un étage de numérisation monté en aval,
   - on détermine la différence entre le signal numérique attribué et celui correspondant au profil de densité lumineuse d'une feuille de verre plane parallèle exempte de défauts (profil de densité lumineuse de base),
   - on calcule le quotient entre les valeurs de différence et les profils de densité lumineuse de base correspondants, et
   - les valeurs absolues de la réfringence ou des valeurs qui y sont proportionnelles sont calculées en multipliant ces quotients par un facteur de correction et sont enfin évaluées numériquement et/ou graphiquement.

2. Procédé suivant la revendication 1, **caractérisé en ce ce que** le profil de densité lumineuse de base nécessaire pour la formation du signal de différence est déterminé par filtrage passe-bas à partir des signaux numérisés correspondant au profil de densité lumineuse de l'image d'ombres dans le champ de mesure.

3. Procédé suivant les revendications 1 et 2, **caractérisé en ce que** la formation du quotient des signaux de différence et des signaux pour la densité lumineuse de base est fondée sur le profil de densité lumineuse de base qui a été mesuré dans les mêmes conditions d'éclairage au préalable sur une feuille de verre plane parallèle exempte de défauts optiques de même épaisseur et à l'abri de lumière extérieure parasite et dont les signaux afférents ont été stockés.

4. Procédé suivant les revendications 1 et 2, **caractérisé en ce que** la formation du quotient des signaux de différence et des signaux pour la densité lumineuse de base est fondée sur le profil de densité lumineuse de base qui a été déterminé dans les mêmes conditions d'éclairage au préalable sur une feuille de verre de même épaisseur comprenant des défauts, à l'abri de lumière parasite extérieure, après filtrage passe-bas symétrique des signaux numérisés et dont les signaux afférents ont été stockés.

5. Procédé suivant les revendications 1 et 2, **caractérisé en ce que** la formation du quotient des signaux de différence et des signaux afférents pour la densité lumineuse de base est fondée sur le profil de densité lumineuse de base qui a été déterminé par filtrage passe-bas symétrique de chaque profil de densité lumineuse mesuré.

6. Procédé suivant une ou plusieurs des revendications 1 à 5, **caractérisé en** ce que les signaux numérisés représentatifs de la densité lumineuse des divers points de l'image comprennent au moins 64 et de préférence plus de 128 niveaux.

7. Procédé suivant une ou plusieurs des revendications 1 à 6, **caractérisé en ce que** des signaux accompagnés de bruit sont filtrés dans un filtre matriciel local symétrique ayant une limite supérieure de la fréquence locale d'au moins 1/(13 mm).

8. Procédé suivant une ou plusieurs des revendications 1 à 7, **caractérisé en ce que** le profil de densité lumineuse est déterminé et évalué suivant une bande comprenant une rangée de lignes de l'image vidéo, des valeurs moyennes représentatives étant formées par filtrage à partir des signaux correspondant aux points d'image juxtaposés perpendiculairement à la direction des lignes.

9. Procédé suivant une ou plusieurs des revendications 2 à 8, **caractérisé** en ce **qu'**on utilise comme filtre passe-bas pour la détermination du profil de densité lumineuse de base pour la formation du signal de différence et/ou pour la formation du quotient à partir des signaux correspondant au profil de densité lumineuse, un filtre symétrique présentant une limite supérieure de la fréquence locale de 1/(80 mm) a 1/(12 mm).

10. Procédé suivant une ou plusieurs des revendications 7 à 9, **caractérisé en ce que** le filtrage est exécuté au moyen d'un filtre matriciel résultant dans le domaine local.

11. Procédé suivant une ou plusieurs des revendications 7 à 9, **caractérisé en ce que** le filtrage est exécuté au moyen d'un filtre résultant dans le domaine d'image d'une transformation linéaire bidimensionnelle, comme une transformation de Fourier 2D ou une transformation de Walsh 2D.

12. Procédé suivant une ou plusieurs des revendications 7 à 9, **caractérisé en ce que** le filtrage est exécuté par intercalation de transformation linéaire unidimensionnelle de Fourier ou la transformation de Walsh.

13. Procédé suivant une ou plusieurs des revendications 1 à 12, **caractérisé en ce que** la valeur calculée pour le réfringence est ramenée à la valeur applicable au rayonnement vertical par un calcul tenant compte de l'angle d'incidence particulier de la lumière projetée sur la feuille de verre.

14. Procédé suivant une ou plusieurs des revendications 1 à 13, **caractérisé en ce qu'**on évalue l'image d'ombres qui se forme, en raison de la transmission de la feuille de verre sur un écran de projection disposé du côté de la feuille de verre opposé à celui du dispositif d'éclairage.

15. Procédé suivant une ou plusieurs des revendications 1 à 13, **caractérisé en ce qu'**on évalue l'image d'ombres qui se forme, en raison de la réflexion sur la feuille de verre sur un écran de projection disposé du même côté que le dispositif d'éclairage.

16. Procédé suivant une ou plusieurs des revendications 1 à 15, **caractérisé** en ce que pour la détermination de la réfringence d'une feuille de verre feuilletée constituée de deux feuilles de verre distinctes assemblées à l'aide d'une couche d'adhésif thermoplastique, l'évaluation de l'image d'ombres se fait suivant au moins deux directions faisant mutuellement un angle.

17. Appareil pour l'exécution du procédé suivant la revendication 1, comprenant un dispositif d'éclairage qui éclaire la feuille de verre (1) suivant un angle d'incidence oblique, un écran de projection restituant l'image d'ombres de la feuille de verre (1), une caméra vidéo (4) et un système de traitement d'image (8), **caractérisé en ce que** le système de traitement d'image (8) comprend un élément de soustraction (23) pour la détermination de la différence de densité lumineuse entre la densité lumineuse réelle et la densité lumineuse de base, et un étage de division (26) pour la formation du quotient de la différence de densité lumineuse et de la densité lumineuse de base.

18. Appareil suivant la revendication 17, **caractérisé en ce que** le système de traitement d'image comprend un étage de filtrage (34) comprenant un filtre local passe-bas symétrique bidimensionnel pour déparasiter les signaux accompagnés de bruit.

19. Appareil suivant la revendication 17 ou 18, **caractérisé en ce que** le système de traitement d'image comprend un étage de filtrage (36) comprenant un filtre passe-bas pour chaque fente d'image dans le sens longitudinal de la feuille de verre.

20. Appareil suivant une ou plusieurs des revendications 17 à 19, **caractérisé en ce qu'**il comprend un étage de filtrage (21) pour la détermination du profil de densité lumineuse de base à partir du profil de densité lumineuse réel fourni par la caméra vidéo.

21. Appareil suivant une ou plusieurs des revendications 17 à 20, **caractérisé en ce qu'**il comprend un étage de correction (28) monté à l'aval de l'étage de division (26).


## Patentansprüche

1. Verfahren zur Bestimmung der optischen Qualität von Flachglas, insbesondere von Floatglas, oder von Produkten aus Flachglas, bei dem die Glasscheibe (1) unter einem schrägen Einfallswinkel beleuchtet und von der beleuchteten Glasscheibe (1) ein Schattenbild auf einem Projektionsschirm erzeugt wird, das entsprechend den sich in einer Richtung der Glasscheibe erstreckenden streifenförmigen Bereichen mit dem Charakter von konvexen oder konkaven Zylinderlinsen aus diesen zugeordneten hellen und dunklen Streifen besteht, gekennzeichnet durch folgende Merkmale:
   - das Schattenbild wird in einem sich senkrecht zu den hellen und dunklen Streifen verlaufenden schmalen Messfeld mit einer Video-Kamera (4) erfaßt;
   - jedem Bildpunkt wird unmittelbar in der Video-Kamera (4) oder in einer nachgeschalteten Digitalisierungsstufe entsprechend seiner Leuchtdichte ein digitalisiertes Signal zugeordnet;
   - zwischen dem zugeordneten Digitalsignal und dem dem Leuchtdichteprofil einer planparallelen fehlerfreien Glasscheibe (Grundleuchtdichteprofil) entsprechenden Digitalsignal wird jeweils das Differenzsignal gebildet;
   - aus den Differenzsignalen und den jeweils entsprechenden Signalen für die Grundleuchtdichte wird jeweils der Quotient gebildet, und
   - durch Multiplikation dieser Quotienten mit einem Korrekturfaktor werden die absoluten Werte der Brechkräfte oder diesen proportionale Werte berechnet und numerisch und/oder graphisch ausgewertet.

2. Verfahren nach Anspruch 1, dadurch gekennzeichnet, daß das für die Bildung des Differenzsignals erforderliche Grundleuchtdichteprofil aus den dem Leuchtdichteprofil des Schattenbildes im Messfeld entsprechenden digitalisierten Signalen durch Tiefpaßfilterung ermittelt wird.

3. Verfahren nach Anspruch 1 und 2, dadurch gekennzeichnet, daß bei der Bildung des Quotienten aus den Differenzsignalen und den Signalen für die Grundleuchtdichte das Grundleuchtdichteprofil zugrundegelegt wird, das bei gleichen Beleuchtungsverhältnissen zuvor an einer optisch fehlerfreien planparallelen Glasscheibe gleicher Dicke unter Abschirmung gegen störendes Fremdlicht gemessen wurde, und dessen zugehörige Signale abgespeichert wurden.

4. Verfahren nach Anspruch 1 und 2, dadurch gekennzeichnet, daß bei der Bildung des Quotienten aus den Differenzsignalen und den zugehörigen Signalen für die Grundleuchtdichte das Grundleuchtdichteprofil zugrundegelegt wird, das unter gleichen Beleuchtungsbedingungen zuvor an einer fehlerbehafteten Glasscheibe gleicher Dicke unter Abschirmung gegen störendes Fremdlicht nach symmetrischer Tiefpaßfilterung der digitalisierten Signale ermittelt wurde und dessen zugehörige Signale abgespeichert wurden .

5. Verfahren nach Anspruch 1 und 2, dadurch gekennzeichnet, daß bei der Bildung des Quotienten aus den Differenzsignalen und den zugehörigen Signalen für die Grundleuchtdichte das Grundleuchtdichteprofil zugrundegelegt wird, das durch symmetrische Tiefpaßfilterung aus dem jeweils gemessenen Leuchtdichteprofil ermittelt wurde.

6. Verfahren nach einem oder mehreren der Ansprüche 1 bis 5, dadurch gekennzeichnet, daß die die Leuchtdichte der verschiedenen Bildpunkte darstellenden digitalen Signale wenigstens 64, und vorzugsweise mehr als 128 Abstufungen aufweisen.

7. Verfahren nach einem oder mehreren der Ansprüche 1 bis 6, dadurch gekennzeichnet, daß verrauschte Signale in einem symmetrischen Matrix-Ortsfilter mit einer oberen Grenze der Ortsfrequenz von wenigstens 1/(13 mm) gefiltert werden.

8. Verfahren nach einem oder mehreren der Ansprüche 1 bis 7, dadurch gekennzeichnet, daß das Leuchtdichteprofil entlang eines eine Reihe von Zeilen des Video-Bildes umfassenden Streifens ermittelt und ausgewertet wird, wobei jeweils aus den den senkrecht zur Zeilenrichtung nebeneinanderliegenden Bildpunkten entsprechenden Signalen durch Filterung repräsentative Mittelwerte gebildet werden.

9. Verfahren nach einem oder mehreren der Ansprüche 2 bis 8, dadurch gekennzeichnet, daß als Tiefpaßfilter zur Ermittlung des Grundleuchtdichteprofils für die Bildung des Differenzsignals und/oder für die Bildung des Quotienten aus den dem Leuchtdichteprofil entsprechenden Signalen ein symmetrisches Filter mit einer oberen Grenze der Ortsfrequenz von 1/(80 mm) bis 1/(12 mm) verwendet wird.

10. Verfahren nach einem oder mehreren der Ansprüche 7 bis 9, dadurch gekennzeichnet, daß die Filterung mit einem resultierenden Matrix-Filter im Ortsbereich durchgeführt wird.

11. Verfahren nach einem oder mehreren der Ansprüche 7 bis 9, dadurch gekennzeichnet, daß die Filterung mit einem resultierenden Filter im Bildbereich einer zweidimensionalen linearen Transformation wie der 2D-Fourier- oder der 2D-Walsh-Transformation durchgeführt wird.

12. Verfahren nach einem oder mehreren der Ansprüche 7 bis 9, dadurch gekennzeichnet, daß die Filterung durch Zwischenschaltung einer eindimensionalen linearen Fourier- oder Walsh-Transformation durchgeführt wird.

13. Verfahren nach einem oder mehreren der Ansprüche 1 bis 12, dadurch gekennzeichnet, daß der errechnete Wert für die Brechkraft unter Berücksichtigung des jeweiligen Einfallswinkels des auf die Glasscheibe aufgestrahlten Lichtes auf den für senkrechte Einstrahlung gültigen Wert umgerechnet wird.

14. Verfahren nach einem oder mehreren der Ansprüche 1 bis 13, dadurch gekennzeichnet, daß das Schattenbild ausgewertet wird, das aufgrund der Durchstrahlung der Glasscheibe auf einem Projektionsschirm entsteht, der auf der der Beleuchtungseinrichtung gegenüberliegenden Seite der Glasscheibe angeordnet ist.

15. Verfahren nach einem oder mehreren der Ansprüche 1 bis 13, dadurch gekennzeichnet, daß das Schattenbild ausgewertet wird, das aufgrund der Reflexion an der Glasscheibe auf einem auf der gleichen Seite wie die Beleuchtungseinrichtung angeordneten Projektionsschirm entsteht.

16. Verfahren nach einem oder mehreren der Ansprüche 1 bis 15, dadurch gekennzeichnet, daß zur Bestimmung der Brechkräfte einer aus zwei durch eine thermoplastische Kleberschicht miteinander verbundenen Einzelglasscheiben bestehenden Verbundglasscheibe die Auswertung des Schattenbildes in wenigstens zwei unter einem Winkel zueinander stehenden Richtungen erfolgt.

17. Vorrichtung zur Durchführung des Verfahrens nach Anspruch 1 mit einer die Glasscheibe (1) unter einem schrägen Einfallswinkel beleuchtenden Beleuchtungseinrichtung, einem das Schattenbild der Glasscheibe (1) wiedergebenden Projektionsschirm, einer Video-Kamera (4) und einem Bildverarbeitungssystem (8), dadurch gekennzeichnet, daß das Bildverarbeitungssystem (8) ein Subtraktionsglied (23) zur Ermittlung der Leuchtdichtedifferenz zwischen der tatsächlichen Leuchtdichte und der Grundleuchtdichte, und eine Divisionsstufe (26) zur Bildung des Quotienten aus der Leuchtdichtedifferenz und der Grundleuchtdichte aufweist.

18. Vorrichtung nach Anspruch 17, dadurch gekennzeichnet, daß das Bildverarbeitungssystem eine Filterstufe (34) mit einem zweidimensionalen symmetrischen Tiefpaß-Ortsfilter zur Entstörung verrauschter Signale aufweist.

19. Vorrichtung nach Anspruch 17 oder 18, dadurch gekennzeichnet, daß das Bildverarbeitungssystem eine Filterstufe (36) mit einem Tiefpaßfilter für jede Bildspalte in Längsrichtung des Glasbandes aufweist.

20. Vorrichtung nach einem oder mehreren der Ansprüche 17 bis 19, dadurch gekennzeichnet, daß sie eine Filterstufe (21) zur Ermittlung des Grundleuchtdichteprofils aus dem von der Video-Kamera gelieferten tatsächlichen Leuchtdichteprofil aufweist.

21. Vorrichtung nach einem oder mehreren der Ansprüche 17 bis 20, dadurch gekennzeichnet, daß sie eine der Divisionsstufe (26) nachgeschaltete Korrekturstufe (28) aufweist.

## Claims

1. Method of determining the optical quality of flat glass, in particular of float glass, or of products of flat glass, according to which the glass sheet (1) is illuminated at an oblique angle of incidence and there is formed, on a projection screen, an ombroscopic image of the illuminated glass sheet (1) which, following the band-shaped regions that extend in one direction of the glass sheet and have the character of convex or concave cylindrical lenses, consists of illuminated and dark bands which are conjugate with them, characterized by the following features:
   - the image is recorded by means of a video camera (4) in a narrow measurement field extending perpendicularly to the illuminated and dark bands,
   - to each point of the image there is attributed a digital signal corresponding to its light density, this digitization taking place directly within the video camera (4) or in a digitization stage connected downstream of it,
   - the difference between the attributed digital signal and that corresponding to the light density profile of a plane-parallel glass sheet free of defects (basic light density profile) is determined,
   - the quotient between the difference values and the corresponding basic light density profiles are calculated, and
   - the absolute values of the focal power or values that are proportional to them are calculated by multiplying these quotients by a correction factor and are finally evaluated digitally and/or graphically.

2. Method according to Claim 1, characterized in that the basic light density profile necessary for the forming of the difference signal is determined by low-pass filtering from the digitized signals corresponding to the light density profile of the image of shadows in the measurement field.

3. Method according to Claims 1 and 2, characterized in that the forming of the quotient of the difference signals and of the signals for the basic light density is founded on the basic light density profile which has previously been measured, in the same illumination conditions, on a plane-parallel glass sheet free of optical defects, of the same thickness and sheltered from external parasitic light, and the associated signals of which have been stored.

4. Method according to Claims 1 and 2, characterized in that the forming of the quotient of the difference signals and the signals for the basic light density is founded on the basic light density profile which has previously been determined, in the same illumination conditions, on a glass sheet of the same thickness comprising defects, sheltered from external parasitic light, after symmetrical low-pass filtration of the digitized signals, and the associated signals of which have been stored.

5. Method according to Claims 1 and 2, characterized in that the forming of the quotient of the difference signals and the associated signals for the basic light density is founded upon the basic light density profile, which has been determined by the symmetrical low-pass filtering of each light density profile measured.

6. Method according to one or more of Claims 1 to 5, characterized in that the digitized signals representing the light density of the various points of the image comprise at least 64 and preferably more than 128 levels.

7. Method according to one or more of Claims 1 to 6, characterized in that signals accompanied by noise are filtered through a symmetrical local matrix filter having an upper limit of the local frequency of at least $1/(13 \text{ mm})$.

8. Method according to one or more of Claims 1 to 7, characterized in that the light density profile is determined and evaluated along a band comprising a row of lines of the video image, mean representative values being formed by filtration from the signals corresponding to the image points juxtaposed perpendicularly to the direction of the lines.

9. Method according to one or more of Claims 2 to 8, characterized in that there is used, as low-pass filter for determining the basic light density profile for forming the difference signal and/or for forming the quotient from the signals corresponding to the light density profile, a symmetrical filter having an upper limit of the local frequency of 1/(80 mm) to 1/(12 mm).

10. Method according to one or more of Claims 7 to 9, characterized in that the filtering is performed by means of an object matrix filter in the local range.

11. Method according to one or more of Claims 7 to 9, characterized in that the filtering is performed by means of an object filter in the image range of a two-dimensional linear transformation, such as a Fourier 2D transformation or a Walsh 2D transformation.

12. Method according to one or more of Claims 7 to 9, characterized in that the filtering is performed by interpolation of unidimensional Fourier linear transformation or by Walsh transformation.

13. Method according to one or more of Claims 1 to 12, characterized in that the value calculated for the refractivity is brought to the value applicable to the vertical radiation by a calculation taking into account the particular angle of incidence of the light projected onto the glass sheet.

14. Method according to one or more of Claims 1 to 13, characterized in that the shadow image which forms as a result of the transmission of the glass sheet on a projection screen disposed on the side of the glass sheet remote from that of the illuminating device is evaluated.

15. Method according to one or more of Claims 1 to 13, characterized in that the shadow image which forms as a result of the reflection from the glass sheet on a projection screen disposed on the same side as the illuminating device is evaluated.

16. Method according to one or more of Claims 1 to 15, characterized in that, for determining the refractivity of a laminated glass sheet composed of two distinct sheets of glass assembled by means of a thermoplastic adhesive film, the evaluation of the shadow image is performed along at least two directions making an angle with one another.

17. Apparatus for carrying out the method according to Claim 1, comprising an illuminating device which illuminates the glass sheet (1) at an oblique angle of incidence, a projection screen restoring the shadow image of the glass sheet (1), a video camera (4) and an image processing system (8), characterized in that the image processing system (8) comprises a subtractor element (23) for determining the difference in light density between the real light density and the basic light density, and a divider stage (26) for forming the quotients of the difference of light density and the basic light density.

18. Apparatus according to Claim 17, characterized in that the image processing system comprises a filtering stage (34) comprising a two-dimensional symmetrical low-pass local filter for removal of interference from the signals accompanied by noise.

19. Apparatus according to Claim 17 or 18, characterized in that the image processing system comprises a filtering stage (36) comprising a low-pass filter for each image slot in the longitudinal direction of the glass sheet.

20. Apparatus according to one or more of Claims 17 to 19, characterized in that it comprises a filtering stage (21) for determining the basic light density profile from the real light density profile supplied by the video camera.

21. Apparatus according to one or more of Claims 17 to 20, characterized in that it comprises a correction stage (28) connected downstream of the divider stage (26).

EP 0 342 127 B1

Fig. 1

13

Fig. 2

Fig. 3

$Fig.4$

$Fig.5$

Fig. 6

DIMENSION EN LARGEUR DE LA NAPPE DE VERRE

DENSITE LUMINEUSE

Fig. 1

DIMENSION EN LARGEUR DE LA NAPPE DE VERRE

MILLIDIOPTRIES